# EUROPÄISCHE PATENTSCHRIFT

(11) **EP 1 881 254 B1**
(45) Veröffentlichungstag und Bekanntmachung des Hinweises auf die Patenterteilung: **03.12.2008**
(21) Anmeldenummer: 07119140.7
(22) Anmeldetag: 14.05.2004
(51) Int. Cl.: F16L 47/24, F16L 47/14, F16L 23/12, E04G 21/04, B65G 53/52

(54) **Transportrohr für Dickstoffe**
Transport pipe for high-viscosity materials
Tuyau de transport pour fluides épais

(30) Priorität: 27.05.2003 DE 10324321
(43) Veröffentlichungstag der Anmeldung: 23.01.2008
(62) Teilanmeldung aus: 04732960.2
(73) Patentinhaber: Putzmeister Concrete Pumps GmbH, 72631 Aichtal (DE)
(72) Erfinder: Wolfram, Markus, 72622 Nürtingen (DE); Kasten, Knut, 73760 Ostfildern (DE); Mäckle, Raimund, 73730 Esslingen (DE)
(74) Vertreter: Wolf, Eckhard

(56) Entgegenhaltungen:
- DE-A- 2 419 898
- DE-A- 19 522 540
- DE-A- 19 821 637
- DE-A- 19 914 668
- FR-A- 2 197 140

## Beschreibung

Die Erfindung betrifft ein Transportrohr für Dickstoffe mit einem Innenrohr aus abriebfestem Kunststoff, mit mindestens einem endseitig a+uf der Außenseite des Innenrohrs stoffschlüssig fixiertem Bundelement, das einen an einem endseitig radial überstehenden Bund axial anschließenden, zum Innenrohr konzentrischen Ringansatz aufweist, sowie mit einer zumindest das Innenrohr umschließenden und mit diesem und mit dem Bundelement verbundenen Verstärkungshülle, wobei der radial überstehende Bund des Bundelements durch eine ringförmige Stirnfläche und eine sich daran radial nach dem Rohrinneren anschließende, von der Stirnfläche aus axial zurückspringende Ringstufe begrenzt ist, und wobei das Kunststoffmaterial des Innenrohrs vom Rohrinneren her in die Ringstufe eingreift. Ein Transportrohr dieser Art, das zum Befüllen von Schiffstanks mit Heizöl bestimmt ist, ist beispielsweise aus der FR-A-2197140 bekannt.

In der Bauindustrie werden vielfach mobile Betonpumpen eingesetzt, womit Beton von einer Aufgabestelle über Transportrohre der eingangs angegebenen Art zu einer Ausbringstelle an der Baustelle gefördert wird. Die Transportrohre befinden sich üblicherweise an den Mastarmen eines Verteilermasts, der mit einem Endschlauch über eine Fernsteuerung zur Betonierstelle dirigiert werden kann. Weiter sind Anwendungsfälle unter Verwendung von stationären Betonpumpen bekannt, bei denen die Transportrohre erdfest von der Aufgabestelle zur Ausbringstelle verlegt werden. Wegen der abrassiven Eigenschaften von strömendem Flüssigbeton müssen die Transportrohre aus einem verschleißfesten Material hergestellt werden. Üblicherweise werden hierfür Stahlrohre verwendet, die innenseitig gehärtet oder verschleißmindernd beschichtet sind.

Der Erfindung liegt die Aufgabe zugrunde, das Transportrohr der eingangs angegebenen Art dahingehend zu verbessern, dass die Verstärkungshülle steifer gestaltet ist und dass eine stoffschlüssige Anbindung der Verstärkungshülle an den Ringansatz des Bundelements geschaffen wird.

Zur Lösung dieser Aufgabe wird gemäß der Erfindung vorgeschlagen, dass die Verstärkungshülle als Stahlrohr ausgebildet ist, an dessen Stirnseite der Ringansatz des Bundelements vorzugsweise stumpf angeschweißt. Durch den erfindungsgemäßen Werkstoffverbund hat das erfindungsgemäße Transportrohr ein niedriges Strukturgewicht, das dennoch eine ausreichende Stabilität und Abriebfestigkeit für Beton bei hoher Biegesteifigkeit aufweist.

Die erfindungsgemäßen Transportrohre werden an ihren einander zugewandten Bünden paarweise mittels schellenartiger Rohrverbinder miteinander verbunden. Mit den vorstehenden Maßnahmen wird erreicht, dass der in den Transportrohren befindliche Beton zwar in den Trennspalt zwischen den Stirnflächen zweier miteinander verbundener Transportrohre eindringen kann, dass er dort aber keine durch die Strömung verursachte Scherkräfte zwischen dem Innenrohr und dem Ringansatz ausübt, die zu einer Ablösung des Innenrohrs führen könnten. Wenn dazuhin an der zurückspringenden Begrenzungsfläche der Ringstufe in axialer Richtung eine schräge oder gekrümmte Übergangsfläche am Bund anschließt, die bis zum Innenradius des innenseitig zylindrischen Ringansatzes reicht, und wenn die Innenfläche des zylindrischen Innenrohrs eine zur Stirnfläche des Bundes hin divergierende Öffnungsschräge oder -krümmung aufweist, wird dafür gesorgt, dass die Strömungskräfte des einströmenden Dickstoffmaterials in Druckkräfte zwischen Innenrohr und Bundelement umgesetzt werden, die einer Ablösung des Innenrohrs entgegenwirken.

Eine ausreichende Abriebfestigkeit gegenüber abrassiven Dickstoffen wird erreicht, wenn das Innenrohr aus Polyurethan beispielsweise mit einer Shore A-Härte von 85 bis 95 besteht. Es ist dabei besonders vorteilhaft, wenn das Innenrohr an das Bundelement vorzugsweise über einen am Bundelement aufgetragenen Haftvermittler oder Primer angegossen ist.

Die erfindungsgemäßen Transportrohre eignen sich aufgrund ihres geringen Strukturgewichts für den Einsatz in mobilen oder stationären Betonpumpen mit Betonverteilermast oder langen Transportstrecken, die eine große Anzahl Transportrohre erfordern.

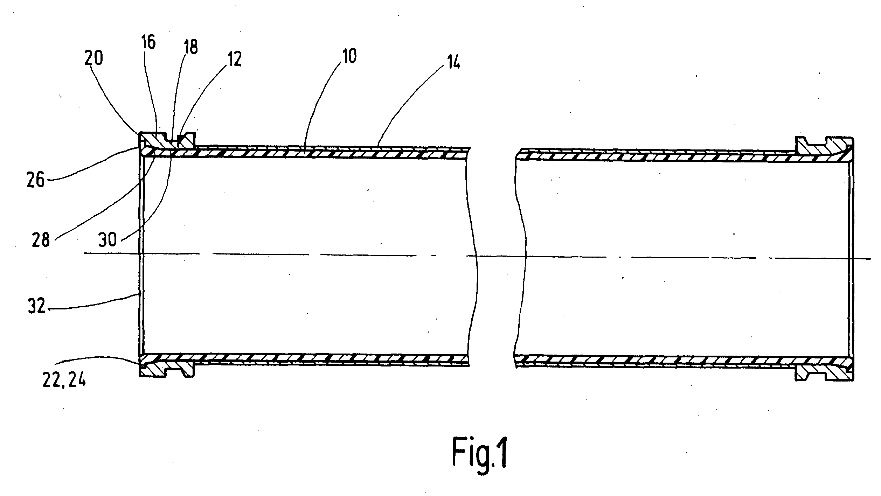

Im Folgenden wird die Erfindung anhand des in der Zeichnung in schematischer Weise dargestellten Ausführungsbeispiels näher erläutert. Es zeigen
- Fig. 1: einen Schnitt durch ein gerades Stahlrohr mit Innenrohr und endseitig angeschweißten Bundelementen;

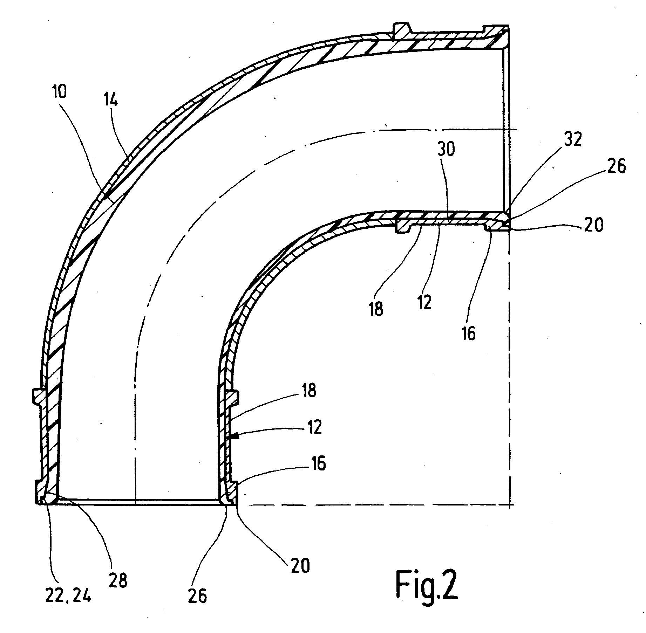

- Fig. 2: einen Schnitt durch einen Rohrbogen aus Stahl mit Innenrohr und endseitig angeschweißten Bundelementen.

Das in der Zeichnung dargestellte Verbundrohr ist als Transportrohr für Dickstoffe, insbesondere für Beton für den Einsatz in Betonpumpen bestimmt.

Das Transportrohr besteht im Wesentlichen aus einem Innenrohr 10 aus abriebfestem Kunststoff, beispielsweise aus Polyurethan, endseitig angeordneten Bundelementen 12 sowie einer das Innenrohr 10 umschließenden und mit dieser und dem Bundelement verbundenen Verstärkungshülle 14. Die aus Metall bestehenden, ringförmigen Bundelemente weisen einen endseitig radial überstehenden Bund 16 und einen axial anschließenden, zum Innenrohr 10 konzentrischen Ringansatz 18 auf. Der Bund ist dazu bestimmt, zwei Transportrohre auf Stoß mittels eines geeigneten, den Bund Transportrohre auf Stoß mittels eines geeigneten, den Bund übergreifenden und einen Trennspalt von außen her überbrückenden Rohrverbinders miteinander zu verbinden, während der Ringansatz 18 eine dichte und dauerhafte Verbindung zwischen Bundelement 12 und den übrigen Teilen des Transportrohrs (Innenrohr 10 und Verstärkungshülle 14) gewährleisten soll.

Eine Besonderheit des Transportrohrs besteht in den Anschlussstellen zwischen dem Bundelement 12 und dem Innenrohr 10. Der radial überstehende Bund 16 ist dort durch eine stirnseitige Ringfläche 20 und eine sich daran radial nach dem Rohrinneren anschließende, von der Stirnfläche 20 aus axial zurückspringende Ringstufe 22 begrenzt, wobei das Kunststoffmaterial des Innenrohrs 10 vom Rohrinneren her in den durch die Ringstufe 22 des Bundes begrenzten freien Bereich 24 eingreift. Das Kunststoffmaterial füllt den freien Bereich 24 vollständig aus und bildet eine an die Stirnfläche 20 des Bundes radial nach innen fluchtend anschließende Stirnflächenpartie 26. An der zurückspringenden Begrenzungsfläche der Stufe 22 schließt in axialer Richtung eine schräge oder gekrümmte Übergangsfläche 28 an, die bis zur zylindrischen Innenfläche 30 des Ringansatzes reicht. Entsprechend weist auch die Innenfläche des zylindrischen Innenrohrs 10 eine zur Stirnflächenpartie 26 hin trompetenartig divergierende Öffnungsschräge 32 auf. Die genannten Merkmale sorgen dafür, dass der in den gekoppelten Transportrohren strömende Flüssigbeton auf die Verbundstelle zwischen Innenrohr und Bund keine das Innenrohr vom Bundelement abhebenden Scherkräfte ausübt. Etwaiges Dickstoffmaterial, das in den Trennspalt zwischen den Stirnflächen 20 zweier benachbarter Transportrohre eindringt, steht im Bereich der Trennstelle zwischen Innenrohr und Bundelement still, so dass an dieser Stelle keine Verschleiß- oder Abhebkräfte angreifen.

Die Verstärkungshülle 14 besteht aus einem Rohr oder Rohrbogen aus Stahl. Die Bundelemente 12 sind mit ihrem rückwärtigen Ringansatz 18 stumpf am Ende des Stahlrohrs angeschweißt. Auf der Innenseite des Stahlrohrs 14 befindet sich ein als Innenbeschichtung ausgebildetes Innenrohr 10 aus Polyurethan. Die Ein- und Auslaufseite des Bunds 16 und des Innenrohrs 10 ist im Bereich der Ringstufe 22 und im Bereich der Stirnflächenpartien 20,26 derart gestaltet, dass der vorbeiströmende Flüssigbeton an der Trennstelle zwischen Innenrohr 10 und Bundelement 12 keine materialabhebenden Scherkräfte ausübt.

Zusammenfassend ist folgendes festzuhalten: Die Erfindung bezieht sich auf ein Transportrohr für Dickstoffe, insbesondere für Beton. Das Transportrohr umfasst ein Innenrohr aus abriebfestem Kunststoff, mindestens ein endseitig auf der Außenseite des Innenrohrs 10 stoffschlüssig fixiertes metallisches Bundelement 12 sowie eine zumindest das Innenrohr umschließende und mit dieser und dem Bundelement verbundene Verstärkungshülle 14. Um eine zuverlässige und dauerhafte Verbindung zwischen Innenrohr und Bundelement zu gewährleisten, wird gemäß der Erfindung vorgeschlagen, dass der radial überstehende Bund des Bundelements durch eine ringförmige Stirnfläche 20 und eine sich daran radial nach dem Rohrinneren anschließende, von der Stirnfläche aus axial zurückspringende Ringstufe 22 begrenzt ist, wobei das Kunststoffmaterial des Innenrohrs 10 vom Rohrinneren her in die Ringstufe 22 eingreift. Die Verstärkungshülle 14 ist als Stahlrohr ausgebildet, an dessen Stirnseite der Ringansatz 18 des Bundelements 12 vorzugsweise stumpf angeschweißt ist.

## Patentansprüche

1. Transportrohr für Dickstoffe mit einem Innenrohr (10) aus abriebfestem Kunststoff, mit mindestens einem endseitig auf der Außenseite des Innenrohrs (10) stoffschlüssig fixierten Bundelement (12), das einen an einem endseitig radial überstehenden Bund (16) axial anschließenden, zum Innenrohr (10) konzentrischen Ringansatz (18) aufweist, sowie mit einer zumindest das Innenrohr (10) umschließenden und mit diesem und mit dem Bundelement (12) verbundenen Verstärkungshülle (14), wobei der radial überstehende Bund (16) des Bundelements (12) durch eine ringförmige Stirnfläche (20) und eine sich daran radial nach dem Rohrinneren anschließende, von der Stirnfläche (20) aus axial zurückspringende Ringstufe (22) begrenzt ist, und wobei das Kunststoffmaterial des Innenrohrs (10) vom Rohrinneren her in die Ringstufe (22) eingreift, **dadurch gekennzeichnet, dass** die Verstärkungshülle (14) als Stahlrohr ausgebildet ist, an dessen Stirnseite der Ringansatz (18) des Bundelements (12) vorzugsweise stumpf angeschweißt ist.

2. Transportrohr nach Anspruch 1, **dadurch gekennzeichnet, dass** das Innenrohr (10) als abriebfeste Innenbeschichtung im Stahlrohr (14) und im anschließenden Bundelement (12) ausgebildet ist.

3. Transportrohr nach Anspruch 1 oder 2, **dadurch gekennzeichnet, dass** das Kunststoffmaterial des Innenrohrs (10) den durch die Ringstufe (22) des Bundes begrenzten freien Bereich (24) ausfüllt und dabei eine an die Stirnfläche (20) des Bundes (16) radial nach innen vorzugsweise fluchtend anschließende Stirnflächenpartie (26) bildet.

4. Transportrohr nach einem der Ansprüche 1 bis 3, **dadurch gekennzeichnet, dass** an der zurückspringenden Begrenzungsfläche der Ringstufe (22) in axialer Richtung eine schräge oder gekrümmte Übergangsfläche (28) anschließt, die bis zum Innenradius des innenseitig zylindrischen Ringansatzes (18) reicht.

5. Transportrohr nach einem der Ansprüche 1 bis 4, **dadurch gekennzeichnet, dass** die Innenfläche des zylindrischen Innenrohrs (10) eine zur Stirnfläche (20,26) des Bundes (16) hin divergierende Öffnungsschräge oder -krümmung aufweist.

6. Transportrohr nach einem der Ansprüche 1 bis 5, **dadurch gekennzeichnet, dass** das Bundelement (12) aus Metall, vorzugsweise aus Stahl besteht.

7. Transportrohr nach einem der Ansprüche 1 bis 5, **dadurch gekennzeichnet, dass** das Bundelement (12) aus einem mit Fasern verstärkten, vorzugsweise gespritzten oder in einer Pressform hergestellte Kunststoffformteil besteht.

8. Transportrohr nach einem der Ansprüche 1 bis 7, **dadurch gekennzeichnet, dass** das Innenrohr (10) aus abriebfreiem Polyurethan besteht.

9. Verwendung des Transportrohrs nach einem der Ansprüche 1 bis 8 für den Einsatz in Verbindung mit mobilen oder stationären Betonpumpen.

10. Verwendung des Transportrohrs nach einem der Ansprüche 1 bis 8 für den Einsatz an einem Betonverteilermast in mobilen oder stationären Betonpumpen.

## Claims

1. Transport pipe for high-viscosity materials, comprising an inner pipe (10) made of wear-resistant plastic, comprising at least one collar element (12) which is integrally fixed at the end on the outer side of the inner pipe (10) and has an annular extension (18) which axially adjoins a collar (16) projecting radially at the end and is concentric to the inner pipe (10), and comprising a reinforcing sleeve (14) enclosing at least the inner pipe (10) and connected to the latter and to the collar element (12), wherein the radially projecting collar (16) of the collar element (12) is defined by an annular end face (20) and an annular step (22) adjoining the latter radially towards the pipe interior and set back axially from the end face (20), and wherein the plastic material of the inner pipe (10) engages in the annular step (22) from the pipe interior, **characterized in that** the reinforcing sleeve (14) is designed as a steel pipe, to the end face of which the annular extension (18) of the collar element (12) is preferably butt-welded.

2. Transport pipe according to Claim 1, **characterized in that** the inner pipe (10) is designed as a wear-resistant inner coating in the steel pipe (14) and in the adjoining collar element (12).

3. Transport pipe according to Claim 1 or 2, **characterized in that** the plastic material of the inner pipe (10) fills the free region (24) defined by the annular step (22) of the collar and in the process forms an end face part (26) adjoining the end face (20) of the collar (16) radially inwards preferably in alignment.

4. Transport pipe according to one of Claims 1 to 3, **characterized in that** a bevelled or curved transition surface (28) adjoins the set-back boundary surface of the annular step (22) in the axial direction and extends up to inner radius of the annular extension (18), which is cylindrical on the inside.

5. Transport pipe according to one of Claims 1 to 4, **characterized in that** the inner surface of the cylindrical inner pipe (10) has an opening bevel or curvature diverging towards the end face (20, 26) of the collar (16).

6. Transport pipe according to one of Claims 1 to 5, **characterized in that** the collar element (12) is made of metal, preferably steel.

7. Transport pipe according to one of Claims 1 to 5, **characterized in that** the collar element (12) consists of a fibre-reinforced plastic moulding preferably injection moulded or produced in a compression mould.

8. Transport pipe according to one of Claims 1 to 7, **characterized in that** the inner pipe (10) is made of wear-resistant polyurethane.

9. Use of the transport pipe according to one of Claims 1 to 8 for use in conjunction with mobile or stationary concrete pumps.

10. Use of the transport pipe according to one of Claims 1 to 8 for use on a concrete-distributing boom in mobile or stationary concrete pumps.

## Revendications

1. Tuyau de transport pour fluides épais, comprenant un tuyau interne (10) en plastique résistant à l'usure, avec au moins un élément d'épaulement (12) fixé par engagement par liaison de matière à une extrémité du côté extérieur du tuyau interne (10), qui présente un élément annulaire (18) concentrique au tuyau interne (10), se raccordant axialement à un épaulement (16) saillant radialement à l'extrémité, et comprenant également un manchon de renfort (14) entourant au moins le tuyau interne (10) et connecté à celui-ci et à l'élément d'épaulement (12), l'épaulement saillant radialement (16) de l'élément d'épaulement (12) étant limité par une surface frontale annulaire (20) et par un gradin annulaire (22) s'y raccordant radialement vers l'intérieur du tuyau, saillant axialement vers l'arrière depuis la surface frontale (20), le matériau en plastique du tuyau interne (10) venant en prise depuis l'intérieur du tuyau dans le gradin annulaire (22), **caractérisé en ce que** le manchon de renfort (14) est réalisé sous forme de tuyau en acier, sur le côté frontal duquel l'élément annulaire (18) de l'élément d'épaulement (12) est soudé de préférence bout à bout.

2. Tuyau de transport selon la revendication 1, **caractérisé en ce que** le tuyau interne (10) est réalisé sous la forme d'un revêtement interne résistant à l'usure dans le tuyau en acier (14) et dans l'élément d'épaulement (12) s'y raccordant.

3. Tuyau de transport selon la revendication 1 ou 2, **caractérisé en ce que** le matériau en plastique du tuyau interne (10) remplit la zone libre (24) délimitée par le gradin annulaire (22) de l'épaulement et forme en l'occurrence une partie de surface frontale (26) se raccordant radialement vers l'intérieur et de préférence en affleurement avec la surface frontale (20) de l'épaulement (16).

4. Tuyau de transport selon l'une quelconque des revendications 1 à 3, **caractérisé en ce qu'**une surface de transition (28) oblique ou courbe se raccorde dans la direction axiale à la surface de limitation en saillie vers l'arrière du gradin annulaire (22), et s'étend jusqu'au rayon interne de l'élément annulaire (18) cylindrique du côté interne.

5. Tuyau de transport selon l'une quelconque des revendications 1 à 4, **caractérisé en ce que** la surface interne du tuyau interne cylindrique (10) présente un biseautage ou une courbure d'ouverture divergente par rapport à la surface frontale (20, 26) de l'épaulement (16).

6. Tuyau de transport selon l'une quelconque des revendications 1 à 5, **caractérisé en ce que** l'élément d'épaulement (12) se compose de métal, de préférence d'acier.

7. Tuyau de transport selon l'une quelconque des revendications 1 à 5, **caractérisé en ce que** l'élément d'épaulement (12) se compose d'une pièce moulée en plastique renforcée par des fibres, de préférence moulée par injection ou fabriquée dans un moule de presse.

8. Tuyau de transport selon l'une quelconque des revendications 1 à 7, **caractérisé en ce que** le tuyau interne (10) se compose de polyuréthane inusable.

9. Utilisation du tuyau de transport selon l'une quelconque des revendications 1 à 8, pour l'utilisation en liaison avec des pompes à béton mobiles ou fixes.

10. Utilisation du tuyau de transport selon l'une quelconque des revendications 1 à 8, pour l'utilisation sur un mât de distribution de béton dans des pompes à béton mobiles ou fixes.
